# EUROPEAN PATENT APPLICATION

(11) **EP 4 844 440 A1**
(43) Date of publication of application: **25.11.2026**
(21) Application number: 26180157.5
(22) Date of filing: 21.05.2026
(51) Int. Cl.: G01S 7/481

(54) **SOLID STATE LIDAR SYSTEM AND METHOD OF OPERATING**

(30) Priority: 21.05.2025 KR 20250066448; 09.02.2026 KR 20260025716
(71) Applicant: LX Semicon Co., Ltd., Daejeon 34027 (KR)
(72) Inventor: OH, Namhoon, 34027 Daejeon (KR)
(74) Representative: Ter Meer und Partner mbB

(57) **Abstract**

An embodiment of the present invention provides a solid-state LiDAR system comprising: a transmitting part (110) having one or more light sources (111); a receiving part (130) configured to receive light generated by the transmitting part (110) and reflected by a target (140); and a mirror part (120) configured to refract the light reflected by the target (140) toward the receiving part (130), wherein the mirror part (120) includes a mirror (121) having a hole (122), the hole being configured to allow a passing of light in direction of the target.

## Description

This application claims priority of the Korean Patent Application No. 10-2025-0066448 filed on May 21, 2025, and No. 10-2026-0025716 filed on February 9, 2026.

### BACKGROUND

### Field of the Invention

The present invention relates to a solid-state LiDAR system without a driving part and an operating method thereof.

### Discussion of the Related Art

Autonomous, self-driving, and semi-autonomous vehicles use a combination of sensors and technologies, such as radar, image recognition cameras, and sonar, to detect and localize objects in their surroundings. These sensor systems play a critical role in implementing driver assistance and safety features such as collision warning, automatic emergency braking (AEB), lane departure warning (LDW), lane keeping assist (LKA), adaptive cruise control (ACC), and pilot driving.

Among these sensor technologies, Light Detection and Ranging (LiDAR) systems are attracting attention as a key technology capable of acquiring high-precision, real-time 3D spatial information about the surrounding environment. LiDAR systems calculate distance information by emitting laser light and measuring the time it takes for it to reflect from surrounding objects, thereby forming a high-resolution 3D map of the vehicle's surroundings.

Most commercially available LiDAR systems incorporate mechanical scanning structures that rotate or vibrate. For example, rotating mirrors or MEMS scanners are used to mechanically control the direction of light beams to detect the driving environment. However, these mechanical driving part increase the device's bulk, increase manufacturing costs, reduce vibration and shock resistance, and lead to long-term reliability issues.

Accordingly, solid-state LiDAR technology, which eliminates mechanical driving part and relies on semiconductor integration, has recently been attracting attention. Therefore, solid-state LiDAR systems offer advantages such as miniaturization, cost reduction, enhanced durability, and faster response times due to their structure lacking mechanical driving part.

However, even existing solid-state LiDAR systems still face technical challenges. For example, if the transmitting part and receiving part each have independent optical paths, optical alignment becomes complex, increasing the number of components and causing optical loss.

Therefore, recent research is actively being conducted toward implementing a solid-state LiDAR system without a driving part by sharing the optical path of the transmitting part and receiving part and simplifying the optical path using an inner hole mirror.

### SUMMARY

One object is to provide a solid-state LiDAR system in which material costs are reduced and miniaturization is realized by sharing the optical path of a transmitting part and a receiving part.

Another object seeks to provide a method of operating such a solid-state LiDAR system.

One or more objects are solved by the features of the independent claims. Preferred embodiments are given in the dependent claims.

One embodiment of the present invention for achieving the above-described technical task is to provide a solid-state LiDAR system including: a transmitting part having one or more light sources; a receiving part configured to receive light generated by the transmitting part and reflected by a target; and a mirror part configured to refract the light reflected by the target toward the receiving part, wherein the mirror part includes a mirror having a hole, the hole being configured to allow a passing of light in direction of the target.

In one or more embodiments, the light output by the transmitting part may be configured to pass the hole to create a field of view of the solid-state LiDAR system.

In one or more embodiments, the target may be in the line of sight of the solid-state LiDAR system.

In one or more embodiments, the transmitting part may be provided on the same optical axis as the target.

In one or more embodiments, the transmitting part may be configured to output the light directly to the target.

In one or more embodiments, the transmitting part may be configured to directly output the light in direction of the target.

In one or more embodiments, a connection axis between the hole and the target may be coaxial with the optical axis of the hole.

In one or more embodiments, the transmitting part may be provided on the same optical axis as the target.

In one or more embodiments, the transmitting part may be configured to output the light directly to the target or directly outputs the light in direction of the target.

In one or more embodiments, a first element of the solid-state LiDAR system receiving the reflected light from the target may be fixed.

In one or more embodiments, the reflected light may first be received by the mirror part.

In one or more embodiments, light generated by the transmitting part may pass through the hole provided in the mirror and may travel toward the target.

In one or more embodiments, light generated by the transmitting part may directly travel toward the target.

In one or more embodiments, light generated by the transmitting part may travel on a substantially straight line.

In one or more embodiments, the hole may occupy an area in a range of 5% to 10% based on a total area of the mirror.

In one or more embodiments, the mirror may be fixed and immobile.

In one or more embodiments, the transmitting part may comprise a micro-collimator lens configured to convert light emitted from the one or more light sources into parallel light.

In one or more embodiments, the transmitting part may comprise a refracting part configured to refract the parallel light converted through the micro-collimator lens and output the refracted parallel light to the mirror part.

In one or more embodiments, the parallel light may be focused into the hole of the mirror by the refracting part.

In one or more embodiments, the refracting part may include any one of a prism, a lens, a mirror, and a meta material.

In one or more embodiments, the refracting part may include a plurality of prisms for refracting the light towards to the hole of the mirror.

In one or more embodiments , the refracting part may include a plurality of prisms for refracting light output by at least one of the one or more light sources is directly provided to the hole of the mirror without passing through a prism.

In one or more embodiments, the receiving part (130 may comprise: an optical part configured to collect light refracted through the mirror part; and a detection part configured to detect the light collected by the optical part and calculate distance information.

In one or more embodiments, the optical part may include a lens or a meta material.

In one or more embodiments, the one or more light sources may comprise Vertical Cavity Surface Emitting Lasers, VCSELs, or Light Emitting Diodes, LEDs, arranged in an array form.

In one or more embodiments, the mirror may be disposed to be tilted at a predetermined angle with respect to each of the transmitting part and the receiving part.

In one or more embodiments, the transmitting part may include multiple light sources each emitting a single light, wherein the light emitted by the multiple light sources is output in parallel.

In one or more embodiments, the light reflected by a target may enter the solid-state LiDAR system and may be only reflected via the mirror having the hole to the receiving part.

In one or more embodiments, the mirror may be opaque for light impinging on the mirror surface.

In one or more embodiments, the surface of the mirror facing the transmitting part may not allow any light to pass to the other side of the mirror except for the hole and the opposing surface of the mirror facing the entering side receiving the reflected light may be configured to reflect the reflected light to the receiving part.

In one or more embodiments, the light output by the solid-state LiDAR system may be immobile.

In one or more embodiments, not moving light may be output or the light may not scan via the target.

In one or more embodiments, the solid-state LiDAR system does not include any moving mirrors.

In one or more embodiments, the solid-state LiDAR system may be a short distance system.

One embodiment of the present invention provides a method for operating a solid-state LiDAR system including a transmitting part, a mirror part including a mirror having a hole, and a receiving part, the method comprising: generating and outputting light traveling toward a target from the transmitting part; allowing the output light to pass through the hole formed in the mirror; allowing the light passing through the hole to be directly targeted to the target and reflected from the target; allowing the light reflected from the target to be reflected by the mirror and guided to the receiving part; and detecting the light at the receiving part and calculating distance information to the target.

### BRIEF DESCRIPTION OF THE DRAWINGS

The above and other objects, features and other advantages of the disclosure will be more clearly understood from the following detailed description taken in conjunction with the accompanying drawings, in which:
FIG. 1 is a block diagram of a solid-state LiDAR system according to the invention.
FIG. 2 is a drawing specifically illustrating the configuration of a solid-state LiDAR system according to the invention.
FIG. 3 is a plan view showing the mirror part of FIG. 2 in detail.
FIG. 4 is a cross-sectional view showing a part of the transmitting part of FIG. 2.
FIG. 5 is a drawing showing an example of the refracting part of FIG. 2.
FIG. 6 is a diagram illustrating a Lambertian scattering simulation performed in a solid-state LiDAR system according to one embodiment of the invention.
FIG. 7 is a diagram illustrating a light-receiving image formed at a receiving part and a scattering image at a target in a solid-state LiDAR system according to one embodiment of the invention.

### DETAILED DESCRIPTION OF THE disclosure

The advantages and features of the present invention, and the methods for achieving them, will become clearer with reference to the embodiments described in detail below, along with the accompanying drawings. However, the present invention is not limited to the embodiments disclosed below, but may be implemented in various different forms. These embodiments are provided solely to ensure that the disclosure of the present invention is complete and to inform those skilled in the art of the scope of the invention.

The shapes, sizes, ratios, angles, numbers, etc. disclosed in the drawings for explaining embodiments of the present invention are merely illustrative, and the present invention is not limited to the details depicted in the drawings. Throughout the specification, identical components may be designated by identical reference numerals. Furthermore, in describing the present invention, if a detailed description of a related known technology is deemed to unnecessarily obscure the gist of the present invention, the detailed description will be omitted.

In this specification, when the words "include," "have," and "consist of" are used, other parts may be added, unless the expression "only" is used. When a component is expressed in the singular, the plural is included unless otherwise explicitly stated.

When interpreting a component, it is interpreted as including the error range even if there is no separate explicit description.

For example, when the positional relationship between two parts is described as 'on top of', 'upper part of', 'lower part of', 'next to', etc., one or more other parts may be located between the two parts unless the expression 'right away' or 'directly' is used.

Spatially relative terms such as "below," "beneath," "lower," "above," and "upper" can be used to easily describe the relationship of one element or component to another, as illustrated in the drawings. Spatially relative terms should be understood to include different orientations of the elements during use or operation in addition to the orientations depicted in the drawings. For example, if an element depicted in the drawings were flipped over, an element described as "below" or "beneath" another element could end up being disposed "above" the other element. Thus, the exemplary term "below" can encompass both the above and below directions. Similarly, the exemplary term "above" or "above" can encompass both the above and below directions.

When describing a temporal relationship, for example, when the temporal relationship is described as 'after', 'following', 'next to', 'before', etc., it can also include cases where it is not continuous, as long as the expression 'immediately' or 'directly' is not used.

While terms like "first" and "second" are used to describe various components, these components are not limited by these terms. These terms are used merely to distinguish one component from another. Therefore, a "first" component referred to below may also be a "second" component within the technical scope of the present invention.

The term "at least one" should be understood to include all possible combinations of one or more associated items. For example, "at least one of the first, second, and third items" can mean any combination of items that can be represented by two or more of the first, second, and third items, as well as each of the first, second, and third items.

The features of each of the various embodiments of the present invention can be partially or wholly combined or combined with each other, and various technical connections and operations are possible, and each embodiment can be implemented independently of each other or implemented together in a related relationship.

In adding reference numerals to components of each drawing describing embodiments of the present invention, the same components may have the same numerals as much as possible even if they are shown in different drawings.

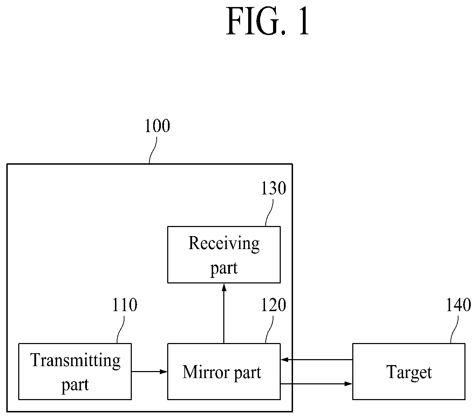

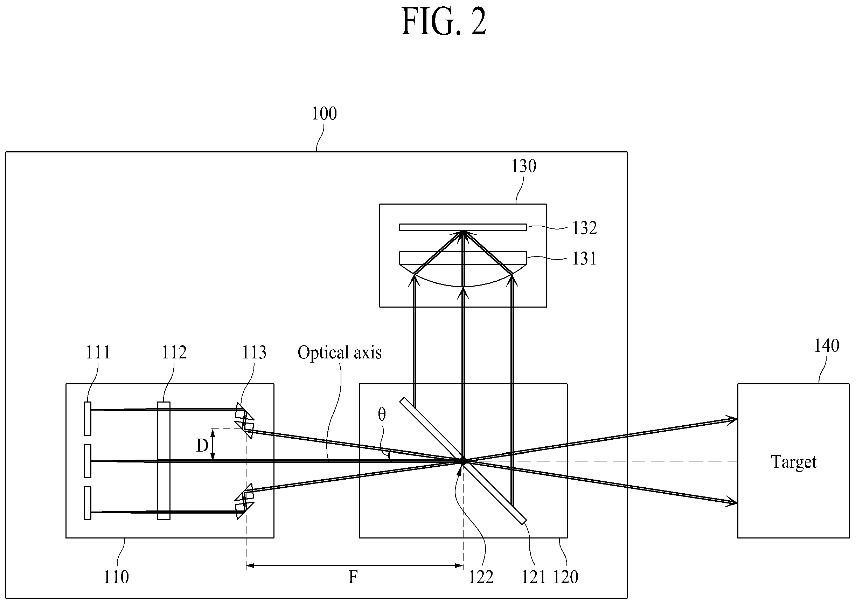

FIG. 1 is a block diagram of a solid-state LiDAR system 100 according to the present invention. FIG. 2 is a drawing specifically illustrating the configuration of a solid-state LiDAR system according to the invention.

Referring to FIG. 1, a solid-state LiDAR system 100 according to the present invention may include a transmitting part 110, a mirror part 120, and a receiving part 130. According to one embodiment of the present invention, the solid-state LiDAR system 100 may be used to determine a distance to one or more targets 140.

In one embodiment of the invention, light emitted from the transmitting part 110 can travel toward the target 140 through the mirror part 120. Thereafter, light reflected from the target 140 can be reflected or refracted by the mirror part 120 and travel toward the receiving part 130.

Referring to FIGS. 1 and 2, the transmitting part 110 includes a plurality of light sources 111, a micro-collimator lens 112, and a refracting part 113.

The plurality of light sources 111 can generate and output pulse-shaped laser light having a predetermined wavelength. For example, the plurality of light sources 111 may include VCSELs (Vertical Cavity Surface Emitting Lasers) or LEDs (Light Emitting Diodes) disposed in an array. Although three light sources 111 are illustrated in FIG. 2, the present invention is not limited thereto, and there may be four or more light sources.

The micro-collimator lens 112 can convert light emitted from the light source 111 into parallel light. Specifically, the micro-collimator lens 112 can prevent light emitted from the light source from being dispersed. The micro-collimator lens 112 can include a plurality of convex portions protruding in the direction in which light is output. These plurality of convex portions can be disposed to be spaced apart from each other.

The refracting part 113 can refract parallel light converted through the micro-collimator lens 112 and output it to the mirror part 120. Specifically, the refracting part 113 can refract the entry path of the parallel light. For example, the refracting part 113 can include any one of a prism, a lens, a mirror, and a nanostructure having a meta material. Although a prism is illustrated as an example of the refracting part 113 in FIG. 2, the present invention is not limited thereto. For example, the prism can be in the shape of a cube composed of two prisms.

Referring to FIGS. 1 and 2, the mirror part 120 may include a mirror 121 having a hole 122. In this case, the mirror 121 may be a flat mirror. The hole 122 may refer to an area where the mirror 121 is not disposed.

According to one embodiment of the invention, light refracted by the refracting part 113 can pass through a hole 122 provided in the mirror 121. Specifically, the refracting part 113 can refract an entry path so that parallel light can pass through the hole 122. More specifically, light generated by the transmitting part 110 can pass through the hole 122 provided in the mirror 121 and head toward the target 140.

According to one embodiment of the invention, parallel light converted through a micro collimator lens 112 can be focused into a hole 122 of a mirror 121 by a refracting part 113.

According to one embodiment of the present invention, the hole 122 may occupy an area in the range of 5 to 10% of the total area of the mirror 121.

If the area occupied by the hole 122 is less than 5% of the total area of the mirror 121, the light emitted from the transmitting part 110 may not sufficiently pass through the hole 122 and may be reflected by the mirror 121. In this case, the transmission efficiency is reduced, and some of the transmitted light may be scattered inside the LiDAR system, which may cause an error.

Conversely, if the area of the hole 122 exceeds 10% of the total area of the mirror 121, the amount of light reflected from the target 140 and passing through the hole 122 of the mirror 121 to enter the receiving part 130 may decrease. This may result in some of the signal light reflected from the target 140 being lost, which may lower the detection sensitivity and affect the distance measurement accuracy.

Therefore, by setting the area of the hole 122 to a range of 5% to 10% of the total area of the mirror 121, a balance between transmission efficiency and reception efficiency can be secured.

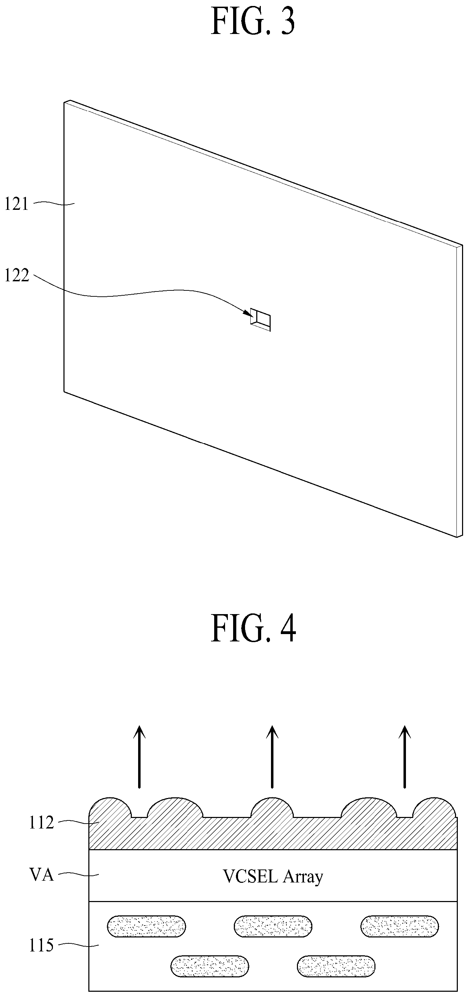

According to one embodiment of the invention, a mirror 121 may be provided with a plurality of holes 122. While FIGS. 2 and 3 illustrate a single hole 122 disposed in the mirror 121, the present invention may not be limited thereto. Nevertheless, the total area of the holes 122 needs to be 5 to 10% of the total area of the mirror 121.

According to one embodiment of the present invention, the hole 122 may be disposed at the center of the mirror 121. However, the present invention may not be limited thereto.

According to one embodiment of the invention, the mirror 121 may be disposed to be tilted in a direction that is not parallel to each other with respect to the transmitting part 110 and the receiving part 130.

Specifically, the mirror 121 may be disposed to have a constant angle with respect to each of the transmitting part 110 and the receiving part 130 so that the paths of the light incident from the transmitting part 110 and the light reflected to the receiving part 130 intersect each other. According to this configuration, the transmitting part 110 and the receiving part 130 can share an optical path through a single common mirror 121, and as a result, there is no need to additionally provide separate optical components, thereby achieving simplification of the structure, reduction of material costs, and miniaturization of the device at the same time.

In addition, according to one embodiment of the present invention, since the optical paths of the transmitting part 110 and the receiving part 130 share a common path in the outer section of the mirror 121 of the mirror part 120, the alignment process for aligning the transmission optical axis and the reception optical axis can be simplified to be performed in a limited area inside the mirror 121 or around the mirror part 120. Accordingly, the complexity of the optical axis adjustment process is reduced and the assembly process is improved, thereby enabling improvement of the manufacturing process and cost reduction.

According to one embodiment of the invention, the mirror 121 can be fixed and immobile. Accordingly, the solid-state LiDAR system 100 does not include a separate driving part, simplifying its structure and eliminating errors and vibrations associated with driving, thereby enhancing reliability. Furthermore, the omission of the driving part allows for miniaturization and cost reduction.

Referring to FIGS. 1 and 2, the receiving part 130 may include an optical part 131 and a detection part 132.

The optical part 131 can collect light refracted through the mirror part 120. The optical part 131 can include either a lens or a nanostructure having a meta material. FIG. 2 illustrates the optical part 131 as a lens. In this case, the lens can protrude toward the direction in which light is incident.

The detection part 132 can detect the light collected by the optical part 131 and calculate distance information to the target 140.

Referring to FIG. 2, the field of view FOV of light emitted from the transmitting part 110 can be defined by calculating the optical path between the refracting part 113 and the hole 122 of the mirror 121. FIG. 2 illustrates that the refracting part 113 is a prism.

Specifically, the range through which light can pass is determined based on the horizontal distance F from the refracting part 113 to the hole 122 of the mirror 121 and the vertical distance D from the refracting part 113 to the optical axis.

Accordingly, the half field of view (Half FOV, 0) formed based on the optical axis of the transmitting part 110 can be expressed according to the following mathematical formula. $θ = {tan}^{- 1} \left(\frac{D}{F}\right)$

Here, the vertical distance D means the vertical distance from the refracting part 113 to the optical axis, and the horizontal distance F means the horizontal distance from the refracting part 113 to the hole 122 of the mirror 121.

According to this relationship, the field of view FOV of light is determined according to the relative position or arrangement between the refracting part 113 of the transmitting part 110 and the hole 122 of the mirror 121.

That is, as the ratio of vertical distance D/horizontal distance F increases, the field of view FOV increases, and the area covered by the light expands, whereas as the ratio of vertical distance D/horizontal distance F decreases, the field of view FOV narrows, and the area covered by the light narrows.

Therefore, in one embodiment of the invention, by adjusting the spacing D, F between the refracting part 113 and the mirror 121, the viewing angle of the transmitting part 110 can be precisely controlled, thereby optimizing the transmission area to the target 140 and improving optical efficiency.

FIG. 4 is a cross-sectional view showing a portion of the transmitting part of FIG. 2. Specifically, FIG. 4 is a cross-sectional view showing a stacked state of a portion of the transmitting part 110 illustrated in FIG. 2. FIG. 4 illustrates a VCSEL array VA and a micro-collimator lens 112 among the transmitting part 110. In this case, the VCSEL array VA may correspond to a plurality of light sources 111 of the present invention.

The VCSEL array VA can be disposed on a micro-channel cooler 115. The micro-channel cooler 115 can reduce heat generated from the VCSEL array VA. Specifically, heat generated from the VCSEL array VA can be removed through a cooling channel of the micro-channel cooler 115.

Since the VCSEL array VA corresponds to the plurality of light sources 111 of the present invention, any duplicate content described above is omitted.

A description of the micro-collimator lens 112 is omitted as it overlaps with the previously described content. The micro-collimator lens 112 may include a plurality of convex portions protruding in the direction in which light is output. These plurality of convex portions may be disposed spaced apart from each other.

Although not shown in the drawing, a refracting part 113 may be disposed on the micro collimator lens 112.

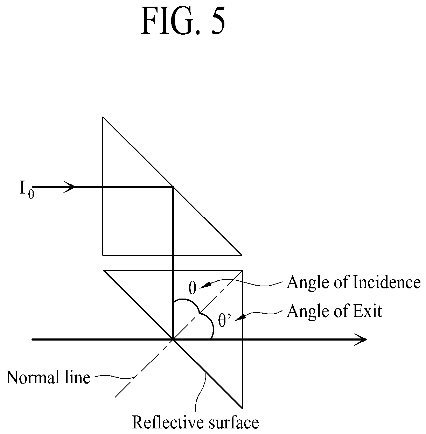

FIG. 5 is a drawing showing an example of the refracting part 113 of FIG. 2. Specifically, FIG. 5 shows an example in which the refracting part 113 is a prism.

Referring to FIG. 5, the refracting part 113 may control a traveling direction of light through a process in which incident light I0 is incident on a reflective surface of a prism and is reflected and refracted.

In this case, an angle at which the incident light I0 is incident on the reflective surface may be referred to as an angle of incidence θ, and an angle at which the light is reflected or refracted and exits may be referred to as an angle of exit θ'.

The optical path inside the prism is defined according to Snell's Law and may be expressed by the following relationship with respect to a normal line of the reflective surface. $n ⋅ sinθ = n ′ ⋅ sinθ ′$

Here, n denotes a refractive index of an incident medium, n' denotes a refractive index of an exit medium, θ denotes an angle formed between the normal line of the reflective surface and the incident light angle of incidence, and θ' denotes an angle formed between the normal line of the reflective surface and the exiting light angle of exit, respectively.

Through this relationship, the refracting part 113 can precisely control the reflection angle or emission angle of light depending on the structure and material of the prism.

That is, the light emitted from the transmitting part 110 is reflected and refracted inside the prism to form an optical path so that it travels precisely in the direction of the hole 122 of the mirror part 120.

Therefore, the prism structure of one embodiment of the invention has an exit of angle 0', the field of view FOV and irradiation area of light directed toward the target 140 can be optimized.

According to one embodiment of the present invention, a method of operating a solid-state LiDAR system may include generating and emitting light that travels from a transmitting part 110 toward a target 140. Specifically, light generated from a plurality of light sources 111 of the transmitting part 110 is transmitted to a mirror part 120 after passing through a micro-collimator lens 112 and a refracting part 113.

Next, the output light can pass through a hole 122 formed in the mirror 121 and be transmitted to the target 140.

Next, light passing through the hole 122 can be reflected from the target 140.

Thereafter, the light reflected from the target 140 is reflected by the mirror 121 and guided to the receiving part 130, and the receiving part 130 can detect the light to calculate distance information with respect to the target 140. Specifically, the light reflected by the mirror 121 can sequentially pass through the optical part 131 and the detection part 132, and the detection part 132 can detect the light to calculate distance information with respect to the target 140.

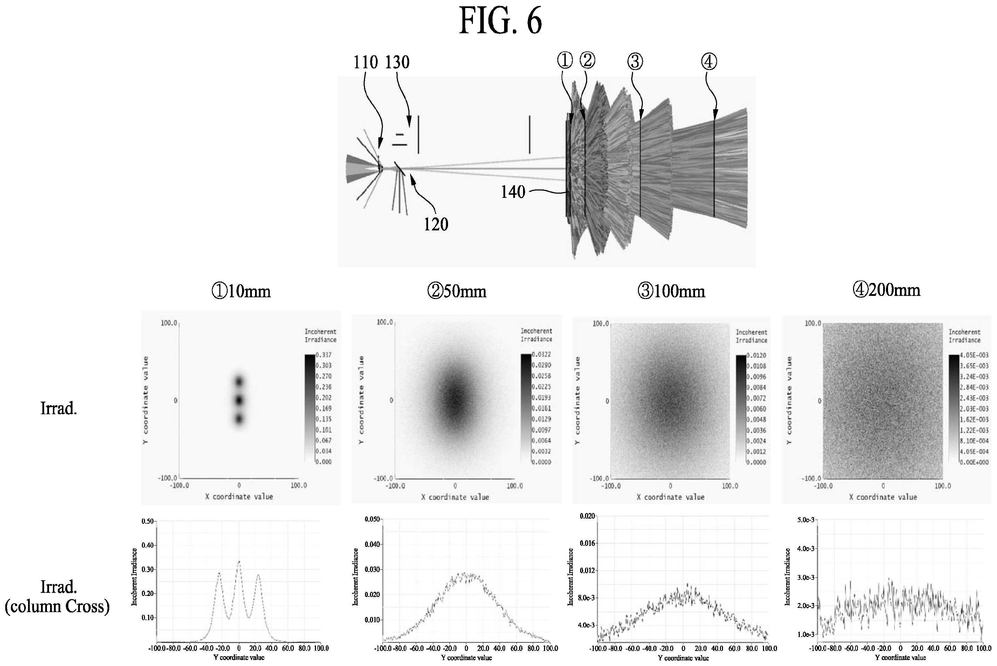

FIG. 6 is a diagram illustrating a Lambertian scattering simulation performed in a solid-state LiDAR system according to one embodiment of the present invention.

Here, Lambertian scattering may be a simulation to check how light reflected from a target 140 spreads spatially.

FIG. 6 illustrates images of the irradiance hereinafter referred to as "Irrad." distribution of light on a plurality of measurement planes ① to ④ spaced apart from the target 140 by predetermined distances, together with column cross-sectional graphs corresponding to each image. Here, irradiance may be understood as a physical quantity corresponding to the amount of optical energy incident per unit area. Each measurement plane is positioned at a different distance from the target 140, corresponding to 10 mm, 50 mm, 100 mm, and 200 mm, respectively.

The Irrad. image shown for each measurement plane may represent a two-dimensional illuminance distribution on the corresponding plane for example, illuminance values according to X and Y coordinates. The "Irrad. column cross" graph shown below each measurement plane may represent a cross-sectional profile of the illuminance in a specific direction for example, the X direction or the Y direction from the two-dimensional distribution. For instance, the column cross graph may be understood as linearly illustrating the change in illuminance values along the Y coordinate.

Referring to FIG. 6, at a measurement plane close to the target 140 for example, 10 mm, the light distribution appears relatively sharp, and a distinct peak may be observed in the corresponding graph. In contrast, as the distance from the target 140 increases for example, 50 mm, 100 mm, and 200 mm, the reflected light spreads over a wider area, resulting in a more blurred image and a broader or more irregular peak in the graph. This simulation is intended to verify how light reflected from the target 140 spreads according to distance and demonstrates that the signal received in the system of the invention may vary depending on distance.

Such changes in irradiance distribution according to distance may be utilized to quantitatively predict the spatial range within which light reflected from the target 140 can be introduced into the receiving part 130. In particular, according to one embodiment of the present invention, based on the simulation results, the size of the mirror 121 of the mirror part 120 may be optimized according to distance conditions so that the reflected light can be sufficiently collected.

That is, by designing the effective reflective area of the mirror 121 to correspond to the distribution range of reflected light diffused by Lambertian scattering, a sufficient amount of light introduced into the receiving part 130 can be stably secured despite variations in the distance to the target 140. Accordingly, the solid-state LiDAR system of the present invention can suppress degradation in reception sensitivity due to distance variation and improve detection reliability and distance measurement accuracy.

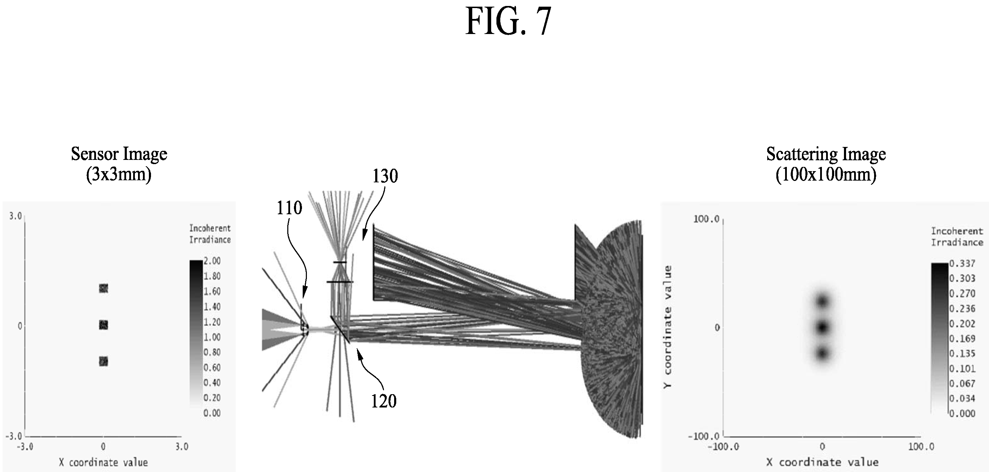

FIG. 7 is a diagram illustrating, in a solid-state LiDAR system according to one embodiment of the present invention, both a light-receiving image formed at the receiving part and a scattering image at the target.

FIG. 7 illustrates a state in which light reflected from the target 140 is guided to the receiving part 130 through the mirror part 120. The propagation path of the spreading light is also indicated.

In addition, on the left side of FIG. 7, a sensor image measured at the detection part of the receiving part 130 is exemplarily shown, and on the right side, a scattering image representing the wide distribution of light at the target 140 is exemplarily shown. For example, the sensor image may represent a light distribution formed within an area of 3 mm × 3 mm. This may be understood as assuming that the effective light-receiving area (active area) of a sensor included in the detection part 132 of the receiving part 130 is 3 mm × 3 mm, and illustrating the illuminance distribution (for example, incoherent irradiance) formed within that area. In other words, this is intended to visually confirm that light scattered from the target 140 can be effectively concentrated into the sensor through the shared optical path structure of the mirror part 120 and the optical part 131.

On the right side of FIG. 7, a "Scattering Image 100 × 100 mm" is illustrated, representing a distribution spreading over an area of 100 mm × 100 mm. The image on the right side of FIG. 7 corresponds to the irradiance distribution image shown at measurement plane ① in FIG. 6. That is, although light reflected from the target 140 may be distributed over a wide area, the solid-state LiDAR system 100 according to one embodiment of the invention allows the transmission path and the reception path to share a common path by means of the mirror 121 and the hole 122, and selectively guides effective components of the widely scattered signal light to the receiving part 130 through the light-collecting function of the optical part 131 so that detection can be performed.

According to one embodiment of the invention, when the optical part 131 of the receiving part 130 includes a lens, the field of view FOV or light-receiving range of the receiving part 130 may be set according to target conditions by adjusting the focal length of the lens. For example, in consideration of the distribution range of the scattering image and the effective light-receiving area active area of the sensor, parameters of the optical part 131 (for example, the focal length) may be set such that the scattered reflected light is properly imaged at an appropriate size and position on the sensor surface.

According to the disclosure, the following advantageous effects may be obtained.

A solid-state LiDAR system according to one embodiment of the invention can reduce material costs and achieve miniaturization by sharing the optical path of a transmitting part and a receiving part.

In addition to the effects mentioned above, other features and advantages of the invention are described below or may be clearly understood by those skilled in the art to which the present invention pertains from such description and explanation.

It will be apparent to those skilled in the art that the present disclosure described above is not limited by the above-described embodiments and the accompanying drawings and that various substitutions, modifications and variations can be made in the present disclosure. Consequently, the scope of the present disclosure is defined by the accompanying claims and it is intended that all variations or modifications derived from the meaning, scope and equivalent concept of the claims fall within the scope of the present disclosure.

## Claims

1. A solid-state LiDAR system comprising:
a transmitting part (110) having one or more light sources (111);
a receiving part (130) configured to receive light generated by the transmitting part (110) and reflected by a target (140); and
a mirror part (120) configured to refract the light reflected by the target (140) toward the receiving part (130), wherein the mirror part (120) includes a mirror (121) having a hole (122), the hole being configured to allow a passing of light in direction of the target.

2. The solid-state LiDAR system of claim 1, wherein the light output by the transmitting part (110) is configured to pass the hole to create a field of view of the solid-state LiDAR system and/or the target is in the line of sight of the solid-state LiDAR system.

3. The solid-state LiDAR system of claim 1 or 2, wherein the transmitting part (110) is provided on the same optical axis as the target and/or the transmitting part (110) is configured to output the light directly to the target or directly outputs the light in direction of the target.

4. The solid-state LiDAR system of claim 1, 2 or 3, wherein a connection axis between the hole and the target is coaxial with the optical axis of the hole.

5. The solid-state LiDAR system of any one of the preceding claims, wherein the hole (122) occupies an area in a range of 5% to 10% based on a total area of the mirror (121).

6. The solid-state LiDAR system of any one of the preceding claims, wherein the mirror (121) is fixed and immobile.

7. The solid-state LiDAR system of any one of the preceding claims, wherein the transmitting part (110) comprises a micro-collimator lens (112) configured to convert light emitted from the one or more light sources (111) into parallel light and a refracting part (113) configured to refract the parallel light converted through the micro-collimator lens (112) and output the refracted parallel light to the mirror part (120), and
wherein the parallel light is focused into the hole (122) of the mirror (121) by the refracting part (113).

8. The solid-state LiDAR system of claim 7, wherein the refracting part (113) includes any one of a prism, a lens, a mirror, and a meta material, preferably the refracting part (113) includes a plurality of prisms for refracting the light towards to the hole (122) of the mirror (121), preferably for refracting light output by at least one of the one or more light sources (111) is directly provided to the hole (122) of the mirror (121) without passing through a prism.

9. The solid-state LiDAR system of any one of the preceding claims, wherein the receiving part (130) comprises:
an optical part (131) configured to collect light refracted through the mirror part (120); and
a detection part (132) configured to detect the light collected by the optical part (131) and calculate distance information, preferably the optical part (131) includes a lens or a meta material.

10. The solid-state LiDAR system of any one of the preceding claims, wherein the transmitting part (110) is provided on the same optical axis as the target and/or the transmitting part (110) is configured to output the light directly to the target or directly outputs the light in direction of the target, and/or
wherein a first element of the solid-state LiDAR system receiving the reflected light from the target is fixed, preferably the reflected light is first received by the mirror part (120).

11. The solid-state LiDAR system of any one of the preceding claims, wherein the mirror (121) is disposed to be tilted at a predetermined angle with respect to each of the transmitting part (110) and the receiving part (130).

12. The solid-state LiDAR system of any one of the preceding claims, wherein the transmitting part (110) includes multiple light sources (111) each emitting a single light, wherein the light emitted by the multiple light sources (111) is output in parallel, and/or
wherein the one or more light sources (111) comprise Vertical Cavity Surface Emitting Lasers, VCSELs, or Light Emitting Diodes, LEDs, arranged in an array form.

13. The solid-state LiDAR system of any one of the preceding claims, wherein the light reflected by a target (140) enters the solid-state LiDAR system and is only reflected via the mirror (121) having the hole (122) to the receiving part (130), preferably the mirror (121) being opaque for light impinging on the mirror surface, preferably the surface of the mirror (121) facing the transmitting part (110) does not allow any light to pass to the other side of the mirror (121) except for the hole (122) and the opposing surface of the mirror facing the entering side receiving the reflected light is configured to reflect the reflected light to the receiving part (130).

14. The solid-state LiDAR system of any one of the preceding claims, wherein the light output by the solid-state LiDAR system is immobile, preferably not moving light is output or the light is not scanning via the target and/or the solid-state LiDAR system is a short distance system.

15. A method of operating a solid-state LiDAR system including a transmitting part (110), a mirror part (120) including a mirror (121) having a hole (122), and a receiving part (130), the method comprising:
generating and outputting light traveling toward a target (140) from the transmitting part (110);
allowing the output light to pass through the hole (122) formed in the mirror (121);
allowing the light passing through the hole (122) to be directly targeted to the target and reflected from the target (140);
allowing the light reflected from the target (140) to be reflected by the mirror (121) and guided to the receiving part (130); and
detecting the light at the receiving part (130) and calculating distance information to the target (140).
